# EUROPEAN PATENT SPECIFICATION

(11) **EP 1 342 045 B1**
(45) Date of publication and mention of the grant of the patent: **11.08.2004**
(21) Application number: 01973875.6
(22) Date of filing: 12.09.2001
(51) Int. Cl.: F28F 21/06

(54) **HEAT EXCHANGER MADE FROM BENDABLE PLASTIC TUBING**
WÄRMETAUSCHER, HERGESTELLT AUS BIEGBAREN KUNSTSTOFFROHREN
ECHANGEUR DE CHALEUR AVEC FONCTION DE REFROIDISSEMENT FAIT D'UNE TUYAUTERIE CINTRABLE EN MATIERE PLASTIQUE ET PROCEDE CORRESPONDANT

(30) Priority: 06.10.2000 US 238507 P
(43) Date of publication of application: 10.09.2003
(73) Proprietor: E.I.Du pont de nemours and company, Wilmington., DE 19805 (US)
(72) Inventor: BERGEVIN, Kevin, Kingston, Ontario K7M 4R1 (CA); CAMPBELL, Gregory, Allan, Kingston, Ontario K7P 2R2 (CA)
(74) Representative: Cockerton, Bruce Roger
(86) International application number: PCT/CA2001/001291
(87) International publication number: WO 2002/029347

(56) References cited:
- WO-A-00/43722
- WO-A-00/53991
- WO-A-98/10927
- WO-A-99/52978
- US-A- 4 313 491
- US-A- 4 605 059
- US-A- 4 981 171
- US-A- 5 109 920
- US-A- 5 262 473
- US-A- 5 997 765

## Description

### BACKGROUND OF THE INVENTION

Plastic tube heat exchangers are known in the art, however, it has proven to be difficult to use existing technology to make practical refrigerant heat exchangers by the existing techniques.

Some of the patents disclosing plastic tube heat exchangers include US 4,484,624 - Vleggaar et al., 1984, and US 4,867,233 - Gemeinhardt, 1989. The former discloses various ways of configuring tubes inside a heat exchanger, including winding overlapping spirals, and the latter includes ways to gather together the ends of a bundle of tubes and connect them to a common header.

US 4,605,059 discloses a plastic tube heat exchanger having a set of at least three plastic tubes positioned around a surface having the shape of a closed curve.

Refrigerant heat exchangers include condensers and evaporators. Typically an evaporator consists of a number of finned metal tubes, typically ¼ inch (6.35mm) outer diameter with aluminum fins, the tubes having a greater internal diameter than the liquid refrigerant inlet tubes, to allow for expansion and cooling, and having a specified length to allow for complete evaporation to the gaseous phase. There are other limitations with metal heat exchangers with fins in other shapes, such as those wound in the shape of open bee hives, with a fan in the middle.

Condensers are configured in an analogous manner, but usually must operate at higher pressures to effect conversion of the gaseous refrigerant to a liquid phase. When attempting to design a refrigerant-capable exchanger from plastic tubing, a number of factors must be considered:
a) Refrigerant to air exchangers have a relatively low flow rate of refrigerant inside the tubes. It is therefore possible to design exchangers with fairly long tubes, as limited by pressure drop considerations. The use of long tubes allows for a reduction in the number of tube connections, for a given exchanger surface area.
b) The need to handle high pressure further requires that the polymeric tubing for evaporators and condensers should be small in diameter.
c) The use of small diameter (1.5 mm OD) further provides a large surface area for heat transfer, per unit of volume, with the potential of matching the heat duty of a metal exchanger, its ability to handle a certain amount of heat exchange in a period of time, in a smaller volume.

By taking these factors into account, it has been determined that individual tube lengths of 10-30 ft (3.3-10 m) are suitable for the refrigerant-air exchangers. For practical reasons it is desirable to form tubing of these lengths in some sort of coil, in order to expose a large surface area to a relatively localized air stream.

Earlier work on polymeric refrigerant-to-air exchangers involved coiling some woven tubing and blowing air through the "face" of the coil as a replacement for a finned-metal exchanger of rectangular shape. One of the drawbacks of this design is that the volume in the centre of the coil, inside the innermost winding, is unavailable for heat transfer and is mainly wasted space. To minimize the wasted space in the centre, it is desirable to use tubing with a very small coiling radius to avoid kinking the tubing, and this can impose limitations on the choice of materials or dimensions of the tubing.

### BRIEF DESCRIPTION OF THE DRAWING(S)

Fig. 1 is a plan view of the process of the invention, starting to lay down the tubes.

Fig. 2 is a perspective schematic view of the process when the first layer of tubes has been laid down and the tubes are being elevated to start the second layer.

Fig. 3 is a plan view of a plastic tube heat exchanger of the invention which could be a refrigerant heat exchanger, including a condenser and an evaporator.

Fig. 4 is an elevation view of a plastic tube heat exchanger of the invention, showing what Fig. 3 would look like generally in elevation.

Fig. 5 is a side view of a spacer used in the invention.

Fig. 6 is a plan view of the spacer of Fig. 5.

### BRIEF SUMMARY OF THE INVENTION

A plastic tube heat exchanger can utilize for separation of one heat exchange fluid from another heat exchange fluid multilayered plastic tubes wherein at least one of the layers is at least 50% by weight of polyamide resin and at least one of the layers is at least 50% by weight thermotropic liquid crystal polymer (LCP) blended with other polymer to make it tough enough so that in the form of 1.5 mm outside-diameter tube it can be bent around a radius of 12.5 mm without cracking or delaminating. Preferably, the tubing can withstand an internal pressure of 10,300 kPascals without bursting. Preferably, the LCP is toughened by blending with a useful amount of rubber or other low-crystallinity polymer in amounts of about 2 to about 30 percent by weight of the total weight of the LCP and rubber or other polymer, preferably about 5 to about 20 percent by weight. Preferably the rubber or other polymer has on it reactive functional groups such as epoxide groups.

The heat exchanger of the invention provides a configuration made possible by the use of the materials described herein, with a set of at least three plastic tubes positioned around a surface having the shape of a closed curve and on a multiplicity of spaced-apart spacers which hold said tubes in a spatial relation to each other, said spacers providing a generally planar base, to form a layer of tubes, said base being generally perpendicular to said surface, wherein the set of tubes is positioned on said base in a generally planar relation to form a layer, with a first tube in said layer having an inward side adjacent said surface and an outward side opposite the inward side, a second tube in said layer proximate the first tube and on the outward side of said first tube opposite said surface, and each succeeding tube on the spacers with an inward side proximate the outward side of previous tube, with a first end of each of said tubes projecting off the base so that they can be joined together in a first header,
where the layer of tubes is about to reach the part of said tubes that projects off of said base, the elevation of the set of tubes rises relative to the base so the next layer of tubes lies on the first layer of tubes with the first tube adjacent said surface, with a multiplicity of layers, each overlaying the previous layer to form a group of layers, the second end of each tube projecting away from said group, and the first end of said tubes joined together to form said first header and said second end of said tubes joined together to form a second header.

Alternative embodiments provide for the spacers in succeeding layers being held together by columns at the inner ends of each spacer in a layer and preferably additional columns also hold together the outer ends of each spacer. Alternatively, instead of using one or both columns, a spacer could be attached to the one below it between the tubes in a layer, such as by snap-on connections.

In various embodiments, the surface is rounded or generally circular or has a curvilinear shape other than rounded, such as a shape generally in the nature of a figure eight.

Preferably at least three spaced-apart spacers are provided on top of each layer, configured so as to provide spacing both between tubes in a layer and between layers, with the spacing within a layer generally being less than the spacing between layers.

In further preferred embodiments, the steps are repeated to form a multiplicity of tube groups, each with its own terminations, each row has from 3 to 100 tubes, preferably from 15 to 30 tubes, more preferably about 20 tubes, each tube group has from 4 to 10 layers of tubes, and the number of tube groups provided is from 3 to 10.

The heat exchanger can be a refrigeration heat exchanger, such as a condenser or an evaporator.

Also, as a process for preparing such plastic tube heat exchangers, the invention provides a method of making a plastic heat exchanger involving winding a set of at least three plastic tubes in a helical manner around a surface having the shape of a closed curve defining an aperture, with said tubes on a multiplicity of spaced-apart spacers which hold said tubes in a spatial relation to each other, said spacers providing a generally planar base, to form a layer of tubes, said base being generally perpendicular to said surface, wherein the set of tubes is positioned on said base in a generally planar relation to form a layer, with a first tube in said layer having an inward side adjacent said surface and an outward side opposite the inward side, a second tube in said layer proximate the first tube and on the outward side of said first tube opposite said surface, and each succeeding tube on the spacers with an inward side proximate the outward side of previous tube, with a first end of each of said tubes projecting off the base so that they can be joined together in a first header, and with the steps of:
arranging said tubes in the described configuration,
positioning said tubes relative to each other so that the layer of tubes winds around the surface,
when the layer of tubes is about to reach the part of said tubes that projects off of said base, adjusting the elevation of the set of tubes relative to the base if needed so the next layer of tubes lies on the first layer of tubes with the first tube adjacent said surface,
repeating the previous step so that a group of layers having a multiplicity of layers is formed, each overlaying the previous layer,
providing a termination of said set of tubes to provide a second end of each tube, and
joining together the first end of said tubes to form said first header and joining together said second end of said tubes in a second header.

Preferably the surface is round or has a curvilinear shape other than round, such as a shape generally in the nature of a figure eight.

Additional preferred methods provide the apparatus of the invention, described above.

Preferably the plastic of the tubes is thermoplastic, at least when it is being formed into the configuration of the heat exchanger. Normally it would not be crosslinked after forming, but in some circumstances it may be desirable to do so.

### DETAILED DESCRIPTION OF THE INVENTION

The present invention provides heat exchangers having plastic coils constructed from materials which permit the construction of complex geometries wherein the preferred geometry of the coil would be difficult to produce from existing metal tube and fin constructions. It further provides for specific coils and methods of manufacture of these coils which take advantage of the properties of these materials. In a preferred embodiment air-flow is through the sidewalls of the coil rather than through the faces. One advantage of this geometry is that there is no longer any wasted space in the center, as the fan is now in the center.

According to the present invention, instead of winding tube layers concentrically, they are wound helically, like a spring or spiral staircase, starting on a flat plate or ring. The tubes are wound in a loop and when they reach the starting point, they are elevated to the next layer, to begin another revolution, and so on, building a higher and higher stack of tubing. A commercial winding operation could involve building a stack on a rotating disk. Spacers are inserted between each layer at several locations around the circumference (generally at 4 to 12 locations) and provide the necessary spacing between tube layers.

This design offers the further advantage that multiple circuits can be added more easily than with the concentric method of winding. Additional circuits can be added, one circuit at a time, to make the stack as high as needed. This method is expected to make it easier to wind multiple parallel circuits, thus facilitating the development of larger prototypes and scale-up to commercial manufacturing operations.

The combination of having the fan inside the coil, the use of stackable spacers to hold the tubes in place, and the use of this configuration, in which the coil is wound in a helical fashion, can provide polymeric tubing exchangers which are compact, efficient and relatively easy to construct.

Another potential feature is that the shape does not need to be circular, but can be, for instance, in a figure eight or racetrack shape or in other desired shapes. It appears that the new method offers much greater flexibility in design.

A feature of some of the configurations of the invention may be that the tubes near the outer perimeter are longer than the inner tubes. This will mean the flow of refrigerant will be higher in the inner tubes than in the outer tubes in order to equalize the pressure drop. It is possible to equalize the tubing length by flipping over the tube array after half of the turns are completed, so that inside tubes then become outside tubes.

Although this difference in tube length could sometimes be a disadvantage, it may also be an advantage in some applications when understood. For example, if warm air is flowing through an evaporator coil from inside to outside, then it will have the greatest temperature difference when it hits the inside tubes, so the inner tubes may be able to make good use of the higher refrigerant flow, thereby improving overall performance.

In order to make functional refrigerant-to-air heat exchangers, some means of joining the plastic tubes and connecting them to the copper piping is desirable. This can achieved by sealing the ganged tubes into a copper pipe using a suitable epoxy resin available from Loctite or Ciba-Geigy, such as Loctite E90FL toughened epoxy resin, a two part product with an amine hardener; the copper pipe can then be joined to the expansion or compression device by conventional metal joining processes. Any number of tubes may be brought together in this manner, depending on the dimensions of the tubes and the number of tubes required to effect heat transfer with minimal pressure drop.

The outer (surface) layer of the tubing may be the same as the bulk of the tube, preferably a polyamide, or may be a polyamide modified to improve bonding, coextruded on to the main structural layer of polyamide. Additional layers of thermoplastic can be incorporated into the tubing such as by coextrusion, including a layer of thermotropic liquid crystal polymer (LCP) to enhance the barrier of the structure. Barrier layers could also be formed in other ways from other materials. The tubing structure may also contain layers of other materials, including inorganics, which may include coatings applied by various methods, to improve barrier properties.

The tubes can be of any diameter and wall thickness, consistent with the need to separate inner and outer heat transfer fluids and to transfer heat. Typical wall thicknesses are 0.005-0.015 in. (0.13-0.38 mm). In general, a minimum inner diameter of 0.030-0.060" (0.76-1.5 mm) is desirable to avoid pluggage in use. The outer diameter is determined by the internal pressure needs of the tube, generally up to a maximum of 0.150-0.250 in. (3.8-6.4 mm).

For practical sizes and configurations of refrigerant heat exchangers, it is desirable to use tubes which are quite flexible and able to bend to a defined small radius without fracture or delamination, yet which also provide good barrier properties to keep in contained refrigerant and to keep out air and moisture. Also, tubes which can be melt-bonded to the spacers after forming the heat exchangers can be desirable. The spacers can be made of a variety of materials, including nylon 6 or 66, or of the same or similar materials as the tubes.

Other optional ingredients may be selected from flame retardants, anti-blocking agents, slip additives, pigments or dyes, processing aids, plasticizers and ultra-violet blocking agents. These may be used in suitable quantities as are well known to those skilled in the art.

Liquid crystal polymers are preferably used in forming layers in the tubes, including as one of the materials an isotropic thermoplastic (ITP). It has been found that a layer of a thermotropic liquid crystalline polymer (LCP) used in the heat exchange surface material (HESM) often alleviates or eliminates a variety of potential problems. By an LCP is meant a polymer that is anisotropic when tested in the TOT Test described in U.S. Patent 4,118,372. An HESM is a material which is used as part of a heat exchanger or a component thereof, and which is the material through which the major portion of the heat that is exchanged between the two fluids (gas or liquid) is meant to flow. It also performs the function of keeping apart the two fluids between which heat is being exchanged. Isotropic herein means that the polymer is isotropic when tested by the TOT Test described in U.S. Patent 4,118,372, which is hereby included by reference. Any ITP may be used so long as it meets certain requirements. It must of course withstand the temperatures to which the HESM is exposed, and should throughout that temperature range provide sufficient strength (together with the LCP) to the HESM to reasonably maintain its shape and contain the fluids in the heat exchanger, as needed. If it is exposed to one or more of the fluids in the heat exchanger (or any other adventitious materials that may contact it) it should be preferably reasonably chemically stable to those fluids so as to maintain its integrity.

Although various types of heat exchangers made simply of ITPs have been described, ITPs sometimes have serious drawbacks when the are the only materials in HESMs. Sometimes an ITP may not be chemically stable to one or more of the fluids in the heat exchanger, for instance, many polyesters hydrolyze or otherwise degrade in the presence of water, water-alcohol, or water-glycol mixtures, especially at higher than ambient temperatures. Many ITPs are relatively permeable to many liquids and/or gases, and therefore allow losses and/or migration of these materials in or from the heat exchanger. Some ITPs may be swollen by one or more of the fluids used in the heat exchanger thereby changing their dimensions and/or physical properties. All of the above are of course problems in plastic heat exchangers.

If the LCP layer is placed between a fluid and any particular ITP in the HESM it usually protects that ITP from chemical degradation by the fluid, and/or also often protects the ITP from being swollen by that fluid. In addition, even if the ITP is swollen, the LCP because of its high relative stiffness, and the fact that it is not swollen by many fluids, help the overall HESM maintain its shape and dimensions. Also, the LCP acts as an excellent barrier layer to many fluids. For instance, in automotive heat exchangers which help cool the engine, the commonly used internal coolant is a mixture of a glycol and water, and the external coolant is air. With many ITPs diffusion of water and/or glycol is so rapid that frequent replenishment of the water/glycol mixture is needed. If an LCP layer is included, the diffusion is greatly decreased.

In order to obtain rapid heat transfer through the HESM, thickness through the material between the heat transfer fluids should be a small as possible. This would be true with any material used for an HESM, but is especially important with plastics since their heat transfer coefficients are usually relatively low when compared to metals. Since the LCP is usually the more expensive of the polymers present in the HESM, it is economically preferable to limit its use. Therefore, in most constructions it is preferred that the LCP is present in relatively thin layer(s) and that layer(s) of the ITP be relatively thick so as to carry much of the structural load of the HESM (i.e., pressure of the fluid(s), maintain structural shape and dimensions, etc.).

The HESM is made up of one or more LCP layers and one or more layers of ITP. If more than one layer of LCP or ITP is present, more than one type of LCP or ITP, respectively, can be used. In addition other layers may be present. For example, so called tie layers, also called adhesive layers, may be used to increase the adhesion between various LCP and ITP layers, or between ITP layers or between LCP layers. The number and placement of the various layers in the HESM will vary depending on the particular polymers chosen, the fluids used in or by the heat exchanger, temperature requirements, environmental needs, etc.

Most commonly, tie layers and LCP layers will be relatively thin compared to the ITP layer(s). Typical constructions are given below, wherein Fluids 1 and 2 represent the fluids involved in the heat transfer:
(a) Fluid 1/LCP/ITP/Fluid 2
(b) Fluid 1/ITP-1/LCP/ITP-2/Fluid 2
(c) Fluid 1/LCP-1/ITP/LCP-2/Fluid 2
(d) Fluid 1/ITP-1/LCP-1/ITP-2/LCP-2/Fluid 2
(e) Fluid 1/ITP-1/ITP-2/LCP/Fluid 2
(f) Fluid 1/LCP-1/ITP-1/ITP-2/LCP-2/Fluid 2

In all of the above constructions, tie layers may be present between all, some or none of the various polymer layers.

Some of the above constructions may be particularly useful in certain situations. If Fluid 1 but not Fluid 2 chemically attacked the ITP, construction (a) may be particularly useful, but (c) and (f) may also be utilized. If both Fluids 1 and 2 attacked the ITP present construction (c) or (f) may be particularly useful. If one wanted to minimize diffusion of one fluid to another, a construction having two LCP layers, such as (c), (d) or (f) could be chosen. If a special surface is required to reduce abrasive damage on the Fluid 1 side, but great stiffness is also required from the ITP, a construction such as (e) could be chosen wherein ITP-1 and ITP-2 have the requisite properties. These and other combinations of layers having the correct properties for various applications will be obvious to the artisan.

Useful LCPs include those described in U.S. Patents 3,991,013, 3,991,014 4,011,199, 4,048,148, 4,075,262, 4,083,829, 4,118,372, 4,122,070, 4,130,545, 4,153,779, 4,159,365, 4,161,470, 4,169,933, 4,184,996, 4,189,549, 4,219,461, 4,232,143, 4,232,144, 4,245,082, 4,256,624, 4,269,965, 4,272,625, 4,370,466, 4,383,105, 4,447,592, 4,522,974, 4,617,369, 4,664,972, 4,684,712, 4,727,129, 4,727,131, 4,728,714, 4,749,769, 4,762,907, 4,778,927, 4,816,555, 4,849,499, 4,851,496, 4,851,497, 4,857,626, 4,864,013, 4,868,278, 4,882,410, 4,923,947, 4,999,416, 5,015,721, 5,015,722, 5,025,082, 5,086,158, 5,102,935, 5,110,896, and 5,143,956, and European Patent Application 356,226. Useful thermotropic LCPs include polyesters, poly(ester-amides), poly(ester-imides), and polyazomethines. Especially useful are LCPs that are polyesters or poly(ester-amides). It is also preferred in these polyesters or poly(ester-amides) that at least about 50 percent, more preferably at least about 75 percent, of the bonds to ester or amide groups, i.e., the free bonds of -C(O)O- and -C(O)NR¹- wherein R¹ is hydrogen or hydrocarbyl, be to carbon atoms which are part of aromatic rings. Included within the definition herein of an LCP is a blend of 2 or more LCPs or a blend of an LCP with one or more ITPs wherein the LCP is the continuous phase.

Useful ITPs are those that have the requisite properties as described above, and include: polyolefins such as polyethylene and polypropylene; polyesters such as poly(ethylene terephthalate, poly(butylene terephthalate), poly(ethylene 2,6-napthalate), and a polyester from 2,2-bis(4-hydroxyphenyl)propane and a combination of isophthalic and terephthalic acids; styrenics such as polystyrene and copolymers of styrene with (meth)acrylic esters; acrylonitrile-butadiene-styrene thermoplastics; (meth)acrylic polymers including homo- and copolymers of the parent acids, and/or their esters and/or amides; polyacetals such as polymethylene oxide; fully and partially fluoropolymers such as polytetrafluoroethylene, polychlorotrifluoroethylene, poly(tetrafluoroethylene/hexafluoropropylene) copolymers, poly[tetrafluoroethylene/perfluoro(propyl vinyl ether)] copolymers, poly(vinyl fluoride), poly(vinylidene fluoride), and poly(vinyl fluoride/ethylene) copolymers; ionomers such as an ionomer of an ethylene-acrylic acid copolymer; polycarbonates; poly(amide-imides); poly(ester-carbonates); poly(imide-ethers); polymethylpentene; linear polyolefins such as polypropylene; poly(etherketoneketone); polyimides; poly(phenylene sulfide); polymers of cyclic olefins; poly(vinylidene chloride); polysulfones; poly(ether-sulfones); and polyamides such as nylon-6,6 nylon-6, nylon-6,12, nylon-6,12, nylon 4,6, and the polyamides from terephthalic acid and/or isophthalic acid and 1,6-hexanediamine and/or 2-methyl-1,5-pentanediamine. Polyamides are preferred ITPs and preferred amides are nylon-6,6, nylon-6, and a copolymer of terephthalic acid with 1,6-hexandiamine and 2-methyl-1,5-pentanediamine wherein 1,6-hexanediamine is about 30 to about 70 mole percent of the total diamine used to prepare the polymer. Especially preferred polyamides are nylon-6,6, nylon-6 and a copolymer of terephthalic acid with 1,6-hexandiamine and 2-methyl-1,5-pentanediamine wherein 1,6-hexanediamine is about 50 mole percent of the total diamine used to prepare the polymer. Included within the definition of ITP herein are blends of 2 or more ITPs or blends of one or more ITPs with an LCP provided that the ITP(s) is the continuous phase.

One or more of the LCPs and ITPs may be toughened. Toughening is known in the art, and may be accomplished by adding one or more or a rubber, functionalized rubber, resin which reacts with the LCP or ITP such as an epoxy resin, or other materials. Toughened polyamides are preferred.

The polymers may contain other materials conventionally found in polymers, such as fillers, reinforcing agents, antioxidants, antiozonants, dyes, pigments, etc. An especially useful material is a filler with high heat conductivity, which may increase the efficiency of the heat exchanger.

Between the layers of tubing made by coextrrusion, tie layers can be used to minimize the likelihood of delamination. The composition of a tie layer will depend on which two polymers are on either side of it. For instance the tie layer may be an ITP functionalized or grafted to provide adhesion between the ITP and LCP layers, or may be a blend of one or more ITPs and one or more LCPs.

Preferably LCP used in the invention will be toughened, especially if it is to be used in tubes which will be wound to a fairly tight radius, such as down to 12.5 mm. Such a small radius may be found either in the coils themselves, such as in a condenser without a fan in the center, or it may be found in a transition form the coil to the outside connection. LCPs can be toughened as is known in the art in various ways, for example by melt blending an LCP with a rubber or other polymer having low crystallinity. In the melt blending it is preferred that the rubber or other polymer be dispersed into the LCP so that the LCP is the continuous phase and rubber or other polymer is present in relatively small particles. It is often preferred that the rubber or other polymer have reactive functional groups on it such as epoxide groups. It is known that this often improves the toughening of the LCP and also may improve the adhesion of the LCP layer to other polymer layers in the tubing. When toughening an LCP a useful amount of rubber or other polymer is about 2 to about 30 percent by weight of the total weight of the LCP and rubber or other polymer, preferably about 5 to about 20 percent by weight. Relevant teachings may be found in US Patent 5,997,765 - Furuta and Yamaguchi (1999), EP Appl. 0 380 112 A2 - Izumi et al. (1990) and PCT Publication WO 93/24574 - Heino et al. (1993) which are all hereby included by reference.

Typical thicknesses for ITP layers will range from about 0.025 to about 0.25 mm. Typical thicknesses for LCP layers will be about 0.01 to about 0.1 mm. Tie layers will usually be as thin as possible, consistent with their providing adhesion between polymer layers. This is usually about 0.01 to about 0.1 mm. The total thickness of the structure is preferably less than about 0.7 mm, more preferably about 0.12 to about 0.5 mm, and especially preferably about 0.15 mm to about 0.4 mm.

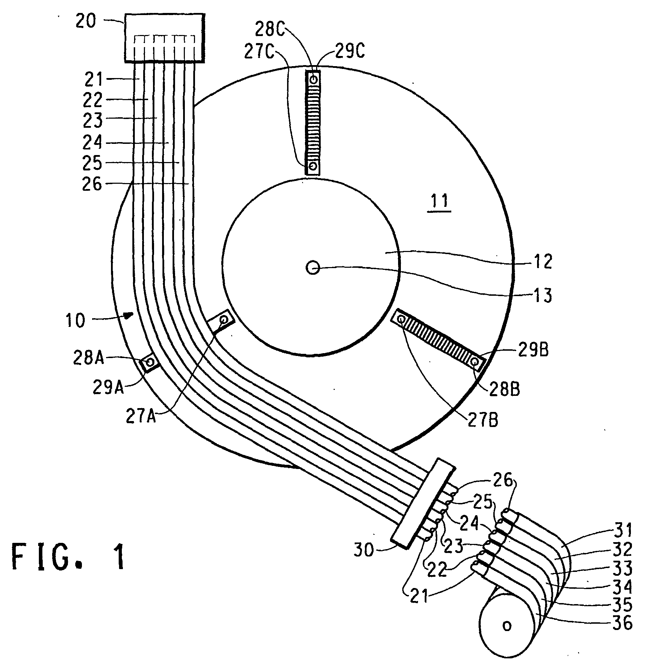

With reference to the drawings, Fig. 1 illustrates the beginning of a process of making a plastic heat exchanger of the invention. A set of tubes 10 is laid on spacers 29A (-C) on a base plate 11. A first end of tubes 21, 22, 23, 24, 25 and 26 extend out from base 10 where they can be gathered together in a header 20, such as a copper tube. The second end of tubes 21 - 26 can be fed through a guide 30 from drums 31 - 36, respectively. Base 11 is provided with additional spacers, 29 B and C. Preferably the spacers are attached to a column 27A at their inner ends, and preferably they are also attached to another column 28A (-C) at their outer ends, to hold them in place. In the drawings, the heat exchangers illustrated are in a cylindrical shape, being formed around a surface 12 incorporating an aperture 13. However, it will be apparent that heat exchangers of the invention can be formed in other curvilinear shapes, depending on where the columns are situated on the base. Also, surface 12 can extend above the plane of base 11 in the form of a mandrel or other form, or it can simply be a surface shaped in space without any physical embodiment. If a mandrel is used, it can be removed after forming the heat exchanger, or it could be made of a porous material, such as a mesh or a perforated sheet, so that coolant can flow through it. Removal of a mandrel could be done physically or chemically, by etching it away. Furthermore, the tubes can be laid down on the spacers by hand or with whatever degree of automation is desired, with reels 31 - 36 supplying the tubes, or even with the tubes previously cut to the desired lengths and fed in by hand.

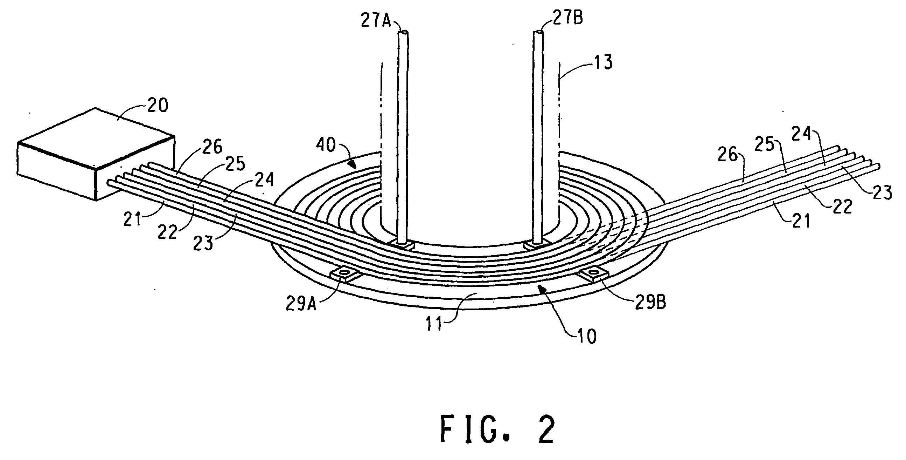

Fig. 2 illustrates a further step in the process of the invention, with the set of tubes 21-26 having been wound around surface 13 and columns 27 A and B, then rising above the first layer of tubes at 40 to overlay the first layer in forming the second layer. Outer columns 28 A-C are not shown in Fig. 2 to indicate that they are optional.

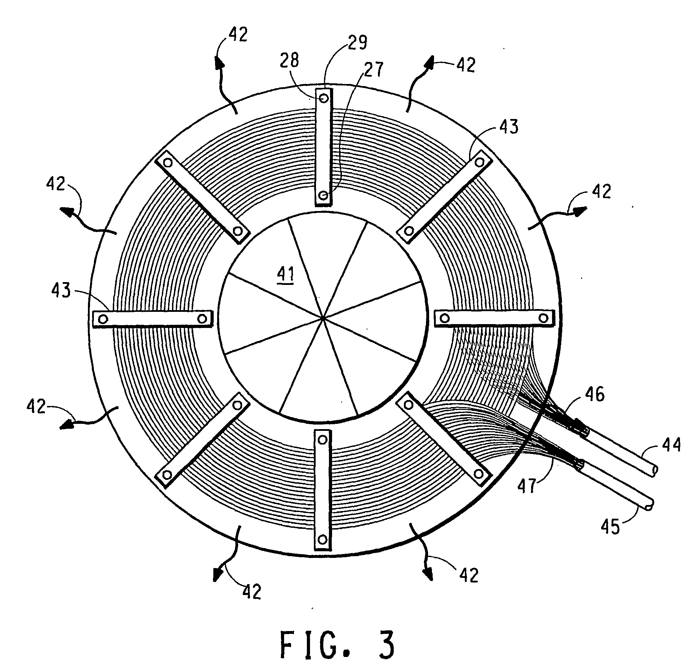

Fig. 3 shows a plastic tube heat exchanger of the invention after the winding of tubes has been completed and headers 44 and 45 have been put in place on the bundles of tubes 46 and 47 coming away from the exchanger. At the center of the exchanger is a fan 41, to draw air or other gas in from the ends and cause it to flow out through the sides, as shown at 42. Spacers 29 and columns 27 and 28 are indicated, holding apart the tubes which can be 20 or more, or less, in each layer.

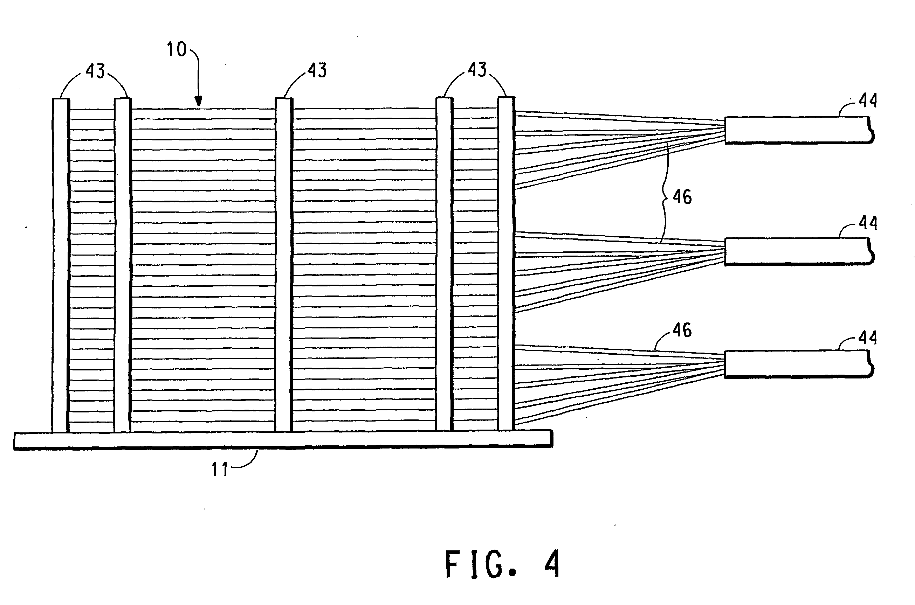

Fig. 4 shows an elevation of the heat exchanger of Fig. 3, illustrating tubes at 10, base 11, spacers 43, bundles of tubes 46, and headers 44. The spacers shown could be for inlet or outlet of coolant which will flow through the tubes.

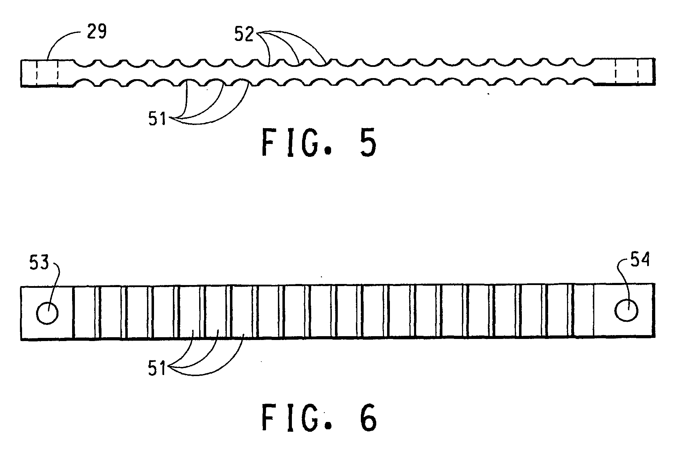

Fig. 5 shows a spacer 29 with grooves 51 and 52 on its top and bottom, respectively, for holding tubes apart.

Fig. 6 is a side view of the spacer, also showing holes 53 and 54 for fitting on the columns.

The selection of polymeric tubing for heat exchangers containing refrigerants must satisfy certain criteria:
a) it must withstand internal pressures appropriate to containment of refrigerants, including normal operating pressures, test pressures, and safety mandated overpressure capabilities
b) it must prevent or minimize egress of refrigerant and ingress of air or water
c) it must be amenable to coiling tightly without kinking or fracturing the LCP layer
d) the walls of the tubing must be thin enough so as not to substantially impede heat transfer

These properties are affected by the tubing diameter, the thicknesses of individual layers, and the modification of the LCP with ITP.

### EXAMPLE

As an example, the tube structure used to construct a refrigeration evaporator was as follows;
Outer diameter 0.059 inch (1.5 mm)
Inner Layer - 3 mils (76 micron) of a compounded blend of the LCP of example 6 of US Patent 5,525,700 - Samuels and Waggoner (1996) (90%w/w), ethylene butylacrylate (5% w/w) (such as is available from Chevron as grade 1802 (18% BA) and Elvaloy 3934-4 (5% w/w)(ethylene/butyl acrylate/ glycidyl methacrylate copolymer). The LCP is a copolymer of biphenol, hydroquinone, terephthalic acid, 2,6-naphthalenedicarboxylic acid, p-hydroxybenzoic acid and 6-hydroxy-2-naphthoic acid in a molar ratio of 50/50/70/30/270/50).
Middle Layer - 1 mil (25 microns) of Bynel 4206 (LDPE grafted with maleic anhydride)
Outer Layer - 5 mil (127 microns) of Zytel 42A NC010 (nylon 6,6), containing minor additives including carbon black pigment, heat stabilizer and lubricant. Elvaloy, Bynel and Zytel are trademarks of DuPont Company, from whom the products are available.

The tubing of this example has a burst pressure in excess of 1500 psig (10,300 kPascals) and can be coiled to a radius of curvature of 0.5 inches (12.3 mm)without kinking (all at 50%RH) and is therefore suitable for constructing coiled heat exchangers to handle refrigerants such as chlorodifluoromethane.

## Claims

1. A plastic tube heat exchanger having a set (10) of at least three plastic tubes (21-26) positioned around a surface (12) having the shape of a closed curve and on a multiplicity of spaced-apart spacers (43) which hold said tubes (21-26) in a spatial relation to each other, **characterised by** said spacers (43) providing a generally planar base, to form a layer of tubes (40), said base being generally perpendicular to said surface (12) wherein the set of tubes (10) is positioned on said base in a generally planar relation to form a layer (40) with a first tube (26) in said layer (40) having an inward side adjacent said surface (12) and an outward side opposite the inward side, a second tube (25) in said layer (40) proximate the first tube (26) and on the outward side of said first tube (26) opposite said surface (12), and each succeeding tube (21-24) on the spacers (43) with an inward side proximate the outward side of previous tube (21-24), with a first end of each of said tubes (21-26) projecting off the base so that they can be joined together in a first header (44), where the layer of tubes (40) is about to reach the part of said tubes (21-26) that projects off of said base, the elevation of the set of tubes (10) relative to the planar base rises relative to the base so the next layer of tubes (40) lies on the first layer of tubes (40) with the first tube (26) adjacent said surface (12), with a multiplicity of layers (40), each overlaying the previous layer (40) to form a group of layers (40), the second end of each tube (21-26) projecting away from said group, and the first end of said tubes (21-26) joined together to form said first header (44) and said second end of said tubes (21-26) joined together to form a second header (45).

2. The plastic tube heat exchanger of claim 1 wherein the spacers (43) in succeeding layers (40) are held together by columns (27) at the inner ends of each spacer (43) in a layer (40).

3. The plastic tube heat exchanger of claim 2 wherein columns (28) also hold together the outer ends of each spacer (43).

4. The plastic tube heat exchanger of claim 1 wherein said surface (12) is generally circular.

5. The plastic tube heat exchanger of claim 1 wherein said surface (12) has a curvilinear shape other than generally circular.

6. The plastic tube heat exchanger of claim 2 wherein said surface (12) has a shape generally in the nature of a figure eight.

7. The plastic tube heat exchanger of claim 1 wherein a multiplicity of spaced-apart spacers (43) are provided on top of each layer (40), configured so as to provide spacing both between tubes (21-26) in a layer (40) and between layers (40).

8. The plastic tube heat exchanger of claim 7 wherein at least three spacers (43) are provided on each layer (40).

9. The plastic tube heat exchanger of claim 8 wherein the spacing within a layer (40) is less than the spacing between layers (40).

10. The plastic heat exchanger of claim 1 wherein there are a multiplicity of tube groups, each with its own terminations.

11. The plastic tube heat exchanger of claim 1 wherein each layer (40) has from 3 to 100 tubes.

12. The plastic tube heat exchanger of claim 9 wherein each layer (40) has 15 to 30 tubes.

13. The plastic tube heat exchanger of claim 1 wherein each tube group has from 4 to 10 layers of tubes (40).

14. The plastic tube heat exchanger of claim 10 wherein the number of tube groups provided is from 3 to 10.

15. A plastic tube heat exchanger of claim 1 which is a refrigerant heat exchanger.

16. The plastic tube heat exchanger of claim 15 which is a condenser.

17. The plastic tube heat exchanger of claim 15 which is an evaporator.

18. A method of making a plastic tube heat exchanger of claim 1 involving winding a set of at least three thermoplastic tubes (21-26) in a helical manner around a surface (12) having the shape of a closed curve defining an aperture (13), with said tubes (21-26) on a multiplicity of spaced-apart spacers (43) which hold said tubes (21-26) in a spatial relation to each other, said spacers (43) providing a generally planar base, to form a layer of tubes (40), said base being generally perpendicular to said surface (12), wherein the set of tubes (10) is positioned on said base in a generally planar relation to form a layer (40), with a first tube (26) in said layer (40) having an inward side adjacent said surface (12) and an outward side opposite the inward side, a second tube (25) in said layer (40) proximate the first tube (26) and on the outward side of said first tube (26) opposite said surface (12), and each succeeding tube (21-24) on the spacers (43) with an inward side proximate the outward side of previous tube (21-24), with a first end of each of said tubes (21-26) projecting off the base so that they can be joined together in a first header (44), and with the steps of:
arranging said tubes (21-26) in the described configuration,
positioning said tubes (21-26) relative to each other so that the layer of tubes (40) winds around the surface (12),
when the layer of tubes (40) is about to reach the part of said tubes (21-26) that projects off of said base, adjusting the elevation of the set of tubes (10) relative to the planar base if needed so the next layer (40) of tubes lies on the first layer of tubes (40) with the first tube (26) adjacent said surface (12),
repeating the previous step so that a tube group having a multiplicity of layers (40) is formed, each overlaying the previous layer (40),
providing a termination of said set of tubes (10) to provide a second end of each tube (21-26), and
joining together the first end of said tubes (21-26) to form said first header (44) and joining together said second end of said tubes (21-26) in a second header (45).

19. The method of claim le wherein said surface (12) is generally circular.

20. The method of claim 18 wherein said surface (12) has a curvilinear shape other than generally circular.

21. The method of claim 20 wherein said surface (12) has a shape generally in the nature of a figure eight.

22. The method of claim 18 wherein a multiplicity of spaced-apart spacers (43) are provided on top of each layer (40), configured so as to provide spacing both between tubes (21-26) in a layer (40) and between layers (40).

23. The method of claim 22 wherein at least three spacers (43) are provided on each layer (40).

24. The method of claim 23 wherein the spacing between tubes (21-26) within a layer (40) is less than the spacing between layers (40).

25. The method of claim 18 wherein the steps are repeated to form a multiplicity of tube groups, each with its own terminations.

26. The method of claim 18 wherein each layer (40) has from 3 to 100 tubes.

27. The method of claim 24 wherein each layer (40) has 15 to 20 tubes.

28. The method of claim 18 wherein each tube group has from 4 to 10 layers of tubes (40).

29. The method of claim 25 wherein the number of tube groups provided is from 3 to 10.

## Patentansprüche

1. Kunststoffrohrwärmetauscher mit einem Satz (10) von mindestens drei Kunststoffrohren (21-26), die um eine Oberfläche (12) mit der Form einer geschlossenen Kurve und auf einer Vielzahl von beabstandeten Abstandshaltern (43) positioniert sind, die die Rohre (21-26) in einer räumlichen Beziehung zueinander halten, **dadurch gekennzeichnet, dass** die Abstandshalter (43) eine im Allgemeinen planare Basis bereitstellen, um eine Schicht von Rohren (40) zu bilden, wobei die Basis im Allgemeinen senkrecht zu der Oberfläche (12) ist, wobei der Satz von Rohren (10) in einer im Allgemeinen planaren Beziehung auf der Basis positioniert ist, um eine Schicht (40) zu bilden, wobei ein erstes Rohr (26) in der Schicht (40) eine zu der Oberfläche (12) benachbarte Einwärtsseite und eine zur Einwärtsseite entgegengesetzte Auswärtsseite aufweist, ein zweites Rohr (25) in der Schicht (40) in naher Nachbarschaft zu dem ersten Rohr (26) und auf der zu der Oberfläche (12) entgegengesetzten Auswärtsseite des ersten Rohrs (26) angeordnet ist und jedes nachfolgende Rohr (21-24) auf den Abstandshaltern (43) mit einer Einwärtsseite in naher Nachbarschaft zur Auswärtsseite eines vorherigen Rohrs (21-24) angeordnet ist, wobei ein erstes Ende von jedem der Rohre (21-26) von der Basis wegsteht, so dass sie in einem ersten Sammelstück (44) miteinander verbunden werden können, wo die Schicht von Rohren (40) im Begriff ist, den Teil der Rohre (21-26) zu erreichen, der von der Basis wegsteht, die Höhe des Satzes von Rohren (10) in Bezug zur planaren Basis in Bezug zur Basis ansteigt, so dass die folgende Schicht von Rohren (40) auf der ersten Schicht von Rohren (40) liegt, wobei sich das erste Rohr (26) benachbart zu der Oberfläche (12) befindet, mit einer Vielzahl von Schichten (40), von denen jede die vorherige Schicht (40) überlagert, um eine Gruppe von Schichten (40) zu bilden, wobei das zweite Ende von jedem Rohr (21-26) von der Gruppe wegsteht und wobei das erste Ende der Rohre (21-26) miteinander verbunden ist, um das erste Sammelstück (44) zu bilden, und das zweite Ende der Rohre (21-26) miteinander verbunden ist, um ein zweites Sammelstück (45) zu bilden.

2. Kunststoffrohrwärmetauscher nach Anspruch 1, bei dem die Abstandshalter (43) in nachfolgenden Schichten (40) durch Pfeiler (27) an den inneren Enden von jedem Abstandshalter (43) in einer Schicht (40) zusammengehalten sind.

3. Kunststoffrohrwärmetauscher nach Anspruch 2, bei dem Pfeiler (28) auch die äußeren Enden von jedem Abstandshalter (43) zusammenhalten.

4. Kunststoffrohrwärmetauscher nach Anspruch 1, bei dem die Oberfläche (12) im Allgemeinen kreisförmig ist.

5. Kunststoffrohrwärmetauscher nach Anspruch 1, bei dem die Oberfläche (12) eine von einer im Allgemeinen kreisförmigen Form verschiedene krummlinige Form aufweist.

6. Kunststoffrohrwärmetauscher nach Anspruch 2, bei dem die Oberfläche (12) eine Form im Allgemeinen in der Beschaffenheit einer Figur acht aufweist.

7. Kunststoffrohrwärmetauscher nach Anspruch 1, bei dem oben auf jeder Schicht (40) eine Vielzahl von beabstandeten Abstandshaltern (43) vorgesehen sind, die konfiguriert sind, um einen Zwischenraum sowohl zwischen Rohren (21-26) in einer Schicht (40) als auch zwischen Schichten (40) vorzusehen.

8. Kunststoffrohrwärmetauscher nach Anspruch 7, bei dem mindestens drei Abstandshalter (43) auf jeder Schicht (40) vorgesehen sind.

9. Kunststoffrohrwärmetauscher nach Anspruch 8, bei dem der Zwischenraum in einer Schicht (40) kleiner als der Zwischenraum zwischen Schichten (40) ist.

10. Kunststoffwärmetauscher nach Anspruch 1, bei dem es eine Vielzahl von Rohrgruppen gibt, jede mit ihren eigenen Abschlüssen.

11. Kunststoffrohrwärmetauscher nach Anspruch 1, bei dem jede Schicht (40) zwischen 3 und 100 Rohre aufweist.

12. Kunststoffrohrwärmetauscher nach Anspruch 9, bei dem jede Schicht (40) 15 bis 30 Rohre aufweist.

13. Kunststoffrohrwärmetauscher nach Anspruch 1, bei dem jede Rohrgruppe zwischen 4 und 10 Schichten von Rohren (40) aufweist.

14. Kunststoffrohrwärmetauscher nach Anspruch 10, bei dem die Anzahl von Rohrgruppen, die vorgesehen ist, zwischen 3 und 10 liegt.

15. Kunststoffrohrwärmetauscher nach Anspruch 1, der ein Kältemittelwärmetauscher ist.

16. Kunststoffrohrwärmetauscher nach Anspruch 15, der ein Kondensator ist.

17. Kunststoffrohrwärmetauscher nach Anspruch 15, der ein Verdampfer ist.

18. Verfahren zur Herstellung eines Kunststoffrohrwärmetauschers nach Anspruch 1, umfassend: Wickeln eines Satzes von mindestens drei thermoplastischen Rohren (21-26) auf eine helixförmige Weise um eine Oberfläche (12) mit der Form einer geschlossenen Kurve, die eine Öffnung (13) begrenzt, wobei sich die Rohre (21-26) auf einer Vielzahl von beabstandeten Abstandshaltern (43) befinden, die die Rohre (21-26) in einer räumlichen Beziehung zueinander halten, wobei die Abstandshalter (43) eine im Allgemeinen planare Basis bereitstellen, um eine Schicht von Rohren (40) zu bilden, wobei die Basis im Allgemeinen senkrecht zu der Oberfläche (12) ist, wobei der Satz von Rohren (10) auf der Basis in einer im Allgemeinen planaren Beziehung positioniert ist, um eine Schicht (40) zu bilden, wobei ein erstes Rohr (26) in der Schicht (40) eine zu der Oberfläche (12) benachbarte Einwärtsseite und eine zu der Einwärtsseite entgegengesetzte Auswärtsseite aufweist, ein zweites Rohr (25) in der Schicht (40) in naher Nachbarschaft zu dem ersten Rohr (26) und auf der zu der Oberfläche (12) entgegengesetzten Auswärtsseite des ersten Rohrs (26) angeordnet ist und jedes nachfolgende Rohr (21-24) auf den Abstandshaltern (43) mit einer Einwärtsseite in naher Nachbarschaft zur Auswärtsseite eines vorherigen Rohrs (21-24) angeordnet ist, wobei ein erstes Ende von jedem der Rohre (21-26) von der Basis wegsteht, so dass sie in einem ersten Sammelstück (44) miteinander verbunden werden können, und mit den Schritten:
Anordnen der Rohre (21-26) in der beschriebenen Konfiguration,
Positionieren der Rohre (21-26) in Bezug zueinander, so dass sich die Schicht von Rohren (40) um die Oberfläche (12) wickelt,
wenn die Schicht von Rohren (40) im Begriffe ist, den Teil der Rohre (21-26) zu erreichen, der von der Basis wegsteht: Einstellen der Höhe des Satzes von Rohren (10) in Bezug zu der planaren Basis, falls erforderlich, so dass die folgende Schicht (40) von Rohren auf der ersten Schicht von Rohren (40) liegt, wobei sich das erste Rohr (26) benachbart zu der Oberfläche (12) befindet,
Wiederholen des vorherigen Schritts, so dass eine Rohrgruppe mit einer Vielzahl von Schichten (40) gebildet wird, die jeweils die vorherige Schicht (40) überlagern,
Bereitstellen eines Abschlusses des Satzes von Rohren (10), um ein zweites Ende von jedem Rohr (21-26) bereitzustellen, und
Miteinanderverbinden des ersten Endes der Rohre (21-26), um das erste Sammelstück (44) zu bilden, und Miteinanderverbinden des zweiten Endes der Rohre (21-26) in einem zweiten Sammelstück (45).

19. Verfahren nach Anspruch 18, bei dem die Oberfläche (12) im Allgemeinen kreisförmig ist.

20. Verfahren nach Anspruch 18, bei dem die Oberfläche (12) eine von einer im Allgemeinen kreisförmigen Form verschiedene krummlinige Form aufweist.

21. Verfahren nach Anspruch 20, bei dem die Oberfläche (12) eine Form im Allgemeinen in der Beschaffenheit einer Figur acht aufweist.

22. Verfahren nach Anspruch 18, bei dem oben auf jeder Schicht (40) eine Vielzahl von beabstandeten Abstandshaltern (43) vorgesehen wird, die konfiguriert sind, um einen Zwischenraum sowohl zwischen Rohren (21-26) in einer Schicht (40) als auch zwischen Schichten (40) vorzusehen.

23. Verfahren nach Anspruch 22, bei dem mindestens drei Abstandshalter (43) auf jeder Schicht (40) vorgesehen sind.

24. Verfahren nach Anspruch 23, bei dem der Zwischenraum zwischen Rohren (21-26) in einer Schicht (40) kleiner als der Zwischenraum zwischen Schichten (40) ist.

25. Verfahren nach Anspruch 18, bei dem die Schritte wiederholt werden, um eine Vielzahl von Rohrgruppen zu bilden, jede mit ihren eigenen Abschlüssen.

26. Verfahren nach Anspruch 18, bei dem jede Schicht (40) zwischen 3 und 100 Rohre aufweist.

27. Verfahren nach Anspruch 24, bei dem jede Schicht (40) 15 bis 20 Rohre aufweist.

28. Verfahren nach Anspruch 18, bei dem jede Rohrgruppe zwischen 4 und 10 Schichten von Rohren (40) aufweist.

29. Verfahren nach Anspruch 25, bei dem die Anzahl von Rohrgruppen, die vorgesehen ist, zwischen 3 und 10 liegt.

## Revendications

1. Echangeur de chaleur constitué de tuyaux en matière plastique ayant un ensemble (10) d'au moins trois tuyaux (21-26) en matière plastique positionnés autour d'une surface (12) ayant la forme d'une courbe fermée et sur une multitude de pièces d'écartement (43) écartées qui maintiennent lesdits tuyaux (21-26) dans une relation spatiale les uns par rapport aux autres, **caractérisé par le fait que** lesdites pièces d'écartement (43) fournissent une base généralement plane, pour former une couche de tuyaux (40), ladite base étant généralement perpendiculaire à ladite surface (12) dans laquelle l'ensemble de tuyaux (10) est positionné sur ladite base dans une relation généralement plane pour former une couche (40) avec un premier tuyau (26) dans ladite couche (40) ayant un côté tourné vers l'intérieur adjacent à ladite surface (12) et un côté tourné vers l'extérieur opposé au côté tourné vers l'intérieur, un second tuyau (25) dans ladite couche (40) à proximité du premier tuyau (26) et sur le côté tourné vers l'extérieur dudit premier tuyau (26) opposé à ladite surface (12), et chaque tuyau (21-24) successif sur les pièces d'écartement (43) avec un côté tourné vers l'intérieur à proximité du côté tourné vers l'extérieur du tuyau (21-24) précédent, avec une première extrémité de chacun desdits tuyaux (21-26) faisant saillie de la base de telle sorte qu'elles puissent être rassemblées dans un premier collecteur (44), où la couche de tuyaux (40) atteint presque la partie desdits tuyaux (21-26) qui fait saillie de ladite base, la hauteur de l'ensemble de tuyaux (10) par rapport à la base plane s'élève par rapport à la base de telle sorte que la couche de tuyaux (40) suivante repose sur la première couche de tuyaux (40) avec le premier tuyau (26) adjacent à ladite surface (12), avec une multitude de couches (40), chacune chevauchant la couche (40) précédente pour former un groupe de couches (40), la seconde extrémité de chaque tuyau (21-26) faisant saillie hors dudit groupe, et les premières extrémités desdits tuyaux (21-26) étant rassemblées pour former ledit premier collecteur (44) et lesdites secondes extrémités desdits tuyaux (21-26) étant rassemblées pour former un second collecteur (45).

2. Echangeur de chaleur constitué de tuyaux en matière plastique selon la revendication 1, dans lequel les pièces d'écartement (43) dans les couches successives (40) sont maintenues ensemble par des colonnes (27) au niveau des extrémités intérieures de chaque pièce d'écartement (43) dans une couche (40).

3. Echangeur de chaleur constitué de tuyaux en matière plastique selon la revendication 2, dans lequel des colonnes (28) maintiennent également ensemble les extrémités extérieures de chaque pièce d'écartement (43).

4. Echangeur de chaleur constitué de tuyaux en matière plastique selon la revendication 1, dans lequel ladite surface (12) est généralement circulaire.

5. Echangeur de chaleur constitué de tuyaux en matière plastique selon la revendication 1, dans lequel ladite surface (12) a une forme curviligne autre que généralement circulaire.

6. Echangeur de chaleur constitué de tuyaux en matière plastique selon la revendication 2, dans lequel ladite surface (12) a une forme ayant généralement la nature d'un chiffre huit.

7. Echangeur de chaleur constitué de tuyaux en matière plastique selon la revendication 1, dans lequel une multitude de pièces d'écartement (43) écartées sont prévues sur le dessus de chaque couche (40), configurées de manière à fournir un écartement à la fois entre les tuyaux (21-26) dans une couche (40) et entre les couches (40).

8. Echangeur de chaleur constitué de tuyaux en matière plastique selon la revendication 7, dans lequel au moins trois pièces d'écartement (43) sont prévues sur chaque couche (40).

9. Echangeur de chaleur constitué de tuyaux en matière plastique selon la revendication 8, dans lequel l'écartement à l'intérieur d'une couche (40) est inférieur à l'écartement entre les couches (40).

10. Echangeur de chaleur constitué de tuyaux en matière plastique selon la revendication 1, dans lequel il existe une multitude de groupes de tuyaux, chacun ayant ses propres terminaisons.

11. Echangeur de chaleur constitué de tuyaux en matière plastique selon la revendication 1, dans lequel chaque couche (40) a de 3 à 100 tuyaux.

12. Echangeur de chaleur constitué de tuyaux en matière plastique selon la revendication 9, dans lequel chaque couche (40) a de 15 à 30 tuyaux.

13. Echangeur de chaleur constitué de tuyaux en matière plastique selon la revendication 1, dans lequel chaque groupe de tuyaux a de 4 à 10 couches de tuyaux (40).

14. Echangeur de chaleur constitué de tuyaux en matière plastique selon la revendication 10, dans lequel le nombre de groupes de tuyaux prévus va de 3 à 10.

15. Echangeur de chaleur constitué de tuyaux en matière plastique selon la revendication 1, qui est un échangeur de chaleur avec fonction de refroidissement.

16. Echangeur de chaleur constitué de tuyaux en matière plastique selon la revendication 15, qui est un condenseur.

17. Echangeur de chaleur constitué de tuyaux en matière plastique selon la revendication 15, qui est un évaporateur.

18. Procédé de fabrication d'un échangeur de chaleur constitué de tuyaux en matière plastique selon la revendication 1 impliquant l'enroulement d'un ensemble d'au moins trois tuyaux thermoplastiques (21-26) de façon hélicoïdale autour d'une surface (12) ayant la forme d'une courbe fermée définissant une ouverture (13), avec lesdits tuyaux (21-26) sur une multitude de pièces d'écartement (43) écartées qui maintiennent lesdits tuyaux (21-26) dans une relation spatiale les uns par rapport aux autres, lesdites pièces d'écartement (43) fournissant une base généralement plane, pour former une couche de tuyaux (40), ladite base étant généralement perpendiculaire à ladite surface (12), dans lequel l'ensemble de tuyaux (10) est positionné sur ladite base dans une relation généralement plane pour former une couche (40), avec un premier tuyau (26) dans ladite couche (40) ayant un côté tourné vers l'intérieur adjacent à ladite surface (12) et un côté tourné vers l'extérieur opposé au côté tourné vers l'intérieur, un second tuyau (25) dans ladite couche (40) à proximité du premier tuyau (26) et sur le côté tourné vers l'extérieur dudit premier tuyau (26) opposé à ladite surface (12), et chaque tuyau (21-24) successif sur les pièces d'écartement (43) avec un côté tourné vers l'intérieur à proximité du côté tourné vers l'extérieur du tuyau précédent (21-24), avec une première extrémité de chacun desdits tuyaux (21-26) faisant saillie hors de la base de telle sorte qu'elles puissent être rassemblées dans un premier collecteur (44) et avec les étapes consistant à :
agencer lesdits tuyaux (21-26) dans la configuration décrite, positionner lesdits tuyaux (21-26) les uns par rapport aux autres de telle sorte que la couche de tuyaux (40) s'enroule autour de la surface (12),
lorsque la couche de tuyaux (40) est sur le point d'atteindre la partie desdits tuyaux (21-26) qui fait saillie hors de ladite base, régler la hauteur de l'ensemble de tuyaux (10) par rapport à la base plane si nécessaire de sorte que la couche (40) suivante de tuyaux repose sur la première couche de tuyaux (40) avec le premier tuyau (26) adjacent à ladite surface (12),
répéter l'étape précédente de sorte qu'un groupe de tuyaux ayant une multitude de couches (40) soit formé, chaque couche chevauchant la couche (40) précédente,
fournir une terminaison dudit ensemble de tuyaux (10) pour fournir une seconde extrémité de chaque tuyau (21-26), et
rassembler les premières extrémités desdits tuyaux (21-26) pour former ledit premier collecteur (44) et rassembler lesdites secondes extrémités desdits tuyaux (21-26) dans un second collecteur (45).

19. Procédé selon la revendication 18, dans lequel ladite surface (12) est généralement circulaire.

20. Procédé selon la revendication 18, dans lequel ladite surface (12) a une forme curviligne autre que généralement circulaire.

21. Procédé selon la revendication 20, dans lequel ladite surface (12) a une forme ayant généralement la nature d'un chiffre huit.

22. Procédé selon la revendication 18, dans lequel une multitude de pièces d'écartement (43) écartées sont prévues sur le dessus de chaque couche (40), configurées de manière à proposer un écartement à la fois entre les tuyaux (21-26) dans une couche (40) et entre les couches (40).

23. Procédé selon la revendication 22, dans lequel au moins trois pièces d'écartement (43) sont prévues sur chaque couche (40).

24. Procédé selon la revendication 23, dans lequel l'écartement entre les tuyaux (21-26) à l'intérieur d'une couche (40) est inférieur à l'écartement entre les couches (40).

25. Procédé selon la revendication 18, dans lequel les étapes sont répétées pour former une multitude de groupes de tuyaux, chacun avec ses propres terminaisons.

26. Procédé selon la revendication 18, dans lequel chaque couche (40) a de 3 à 100 tuyaux.

27. Procédé selon la revendication 24, dans lequel chaque couche (40) a de 15 à 20 tuyaux.

28. Procédé selon la revendication 18, dans lequel chaque groupe de tuyaux a de 4 à 10 couches de tuyaux (40).

29. Procédé selon la revendication 25, dans lequel le nombre de groupes de tuyaux va de 3 à 10.
